# EUROPEAN PATENT APPLICATION

(11) **EP 2 627 066 A1**
(43) Date of publication of application: **14.08.2013**
(21) Application number: 12305145.0
(22) Date of filing: 10.02.2012
(51) Int. Cl.: H04N 1/00, H04N 1/32

(54) **Method, apparatus and system for providing data to a data disclosing device**

(71) Applicant: Gemalto SA, 92190 Meudon (FR)
(72) Inventor: Couvert, Aurélien, 13705 La ciotat cedex (FR); Martin, Evan, 13705 La ciotat cedex (ID); Tan, Theresa Joy, 13705 La ciotat cedex (ID)

(57) **Abstract**

The invention relates to a method for providing data to a data disclosing device.

According to the invention, the data disclosing device includes means for disclosing data and at least one first memory for storing data to be disclosed, the first memory having a first size, an apparatus being coupled to the data disclosing device, the apparatus comprising at least one second memory for storing data to be disclosed, the method comprises the following steps:
- the apparatus presents a description of a set of at least two data files, the file set description comprising a second size, the second size being greater than the first size, each of the at least two data files comprising at least one data block;
- the apparatus sends to the data disclosing device data relating to a first file and at least one data block relating to at least one second data file; and
- the apparatus sends, over a radiofrequency link, to a first remote server (16) a request (28) for sending at least one data file and/or at least one address of at least one third memory storing at least one data file.

The invention also relates to corresponding apparatus and system.

## Description

### Field of the invention:

The invention relates generally to a method for providing data to a data disclosing device.

Furthermore, the invention also pertains to a token for providing data to a data disclosing device.

Within the present description, a token is a smart object that is intended to communicate with the outside world.

Within the present description, a data disclosing device is a device that is intended to disclose data, over an audio channel and/or a visual channel, to the outside world.

Finally, the invention also pertains to a system for providing data to a data disclosing device.

The present invention is notably, but not exclusively, applicable to a digital photo frame (or termed digital media frame), as data disclosing device, to which a Universal Serial Bus (or USB) type dongle, as token, is coupled.

### State of the art:

As known per se, a digital photo frame is a picture frame that displays digital photos.

There are digital photo frames that are Bluetooth (registered Trademark) enabled. These Bluetooth digital photo frames load, over a RadioFrequency (or RF) link, in a dynamic manner, photos originating from a remote (web) server connected to Internet. Thus, such wireless (enabled) digital photo frames displays photos that are dynamically updated from the remote web server.

There is a need to supply a solution that allows providing, over an RF link, data to be disclosed by a digital photo frame, as data disclosing device that is not wireless enabled.

### Summary of the invention:

The invention proposes a solution for satisfying the just herein above specified need by supplying a method for providing data to a data disclosing device.

According to the invention, the data disclosing device including means for disclosing data and possibly at least one first memory for storing data to be disclosed, the first memory having a first size, a token being coupled to the data disclosing device, the token comprising at least one second memory for storing data to be disclosed, the method comprises the following steps. The token presents a description of a set of at least two data files, the file set description comprising a second size, the second size being greater than the first size. Each of the at least two data files comprising at least one data block, the token sends to the data disclosing device data relating to a first file and at least one data block relating to at least one second data file. And the token sends, over a radiofrequency link, to a first remote server a request for sending at least one data file and/or at least one address of at least one third memory storing at least one data file.

The principle of the invention consists in associating a contact-less and/or wireless (enabled) token with a data disclosing device provided or not with a memory for recording data to be disclosed. The token has a memory for recording data to be disclosed. On one hand, the token is configured so as to force the data disclosing device to read from the token memory recorded data relating to one (data) file and at least part of another file. The configuration of the token resides in an exposure of a size of files that is bigger than a size of a possible memory relating to the data disclosing device. On the other hand, the token requests, over an RF link, from a remote server data relating to at least one file and/or an address(es) of one third memory(ies) data relating to at least one file.

Thus, the token enables to let read by the data disclosing device the token memory and to launch a loading, over an RF link, of the token memory with data to be disclosed.

Until the token receives from a remote server at least one complete file, the token sends to the data disclosing device one file and possibly another file(s) before sending one complete received file(s).

The invention allows triggering a transfer of data issued from a token memory to a hosting data disclosing device and initiating a loading, over an RF link, of the token memory with one or several data files originating from a remote server and/or at least one third memory.

According to a further aspect, the invention is a token for providing data to a data disclosing device.

According to the invention, the token being likely to be coupled to a data disclosing device and to be connected to at least one remote server, the data disclosing device including means for disclosing data and possibly at least one first memory for storing data to be disclosed, the first memory having a first size, the token comprising at least one second memory for storing data to be disclosed, the token is adapted to:
- present a description of a set of at least two data files, the file set description comprising a second size, the second size being greater than the first size, each of the at least two data files comprising at least one data block;
- send to the data disclosing device data relating to a first file and at least one data block relating to at least one second data file; and
- send, over a radiofrequency link, to a first remote server a request for sending at least one data file and/or at least one address of at least one third memory storing at least one data file.

As token, it may be a USB type dongle, a smart card to be coupled to a hosting data disclosing device, as removable token, or a chip intended to be fixed, possibly in a removable manner, to a hosting data disclosing device.

It is to be noticed that the invention does not impose any constraint as to a kind of the token memory.

According still to a further aspect, the invention is a system for providing data to a data disclosing device.

According to the invention, the system comprising a token and a first remote server, the token being coupled to a data disclosing device, the data disclosing device including means for disclosing data and possibly at least one first cache memory for storing data to be disclosed, the first cache memory having a first size, the token comprising at least one second memory for storing data to be disclosed, the token is adapted to:
- present a description of a set of at least two data files, the file set description comprising a second size, the second size being greater than the first size, each of the at least two data files comprising at least one data block;
- send to the data disclosing device data relating to a first file and at least one data block relating to at least one second data file; and
- send, over a radiofrequency link, to a first remote server a request for sending at least one data file and/or at least one address of at least one third memory storing at least one data file.

As to the data disclosing device, it may be a Digital Photo Frame (or DPF) or a digital media frame.

The data disclosing device may also include a portable device, such as a handheld computer, like a mobile (tele)phone, a Personal Digital Assistant (or PDA), a Voice Over Internet Protocol handset, a netbook, a tablet or a mobile laptop.

The data disclosing device may be a set-top box, a desktop computer, a Personal Computer (or PC), a media player, a game console, and/or a TeleVision (or TV) set.

### Brief description of the drawings:

Additional features and advantages of the invention will be more clearly understandable after reading a detailed description of one preferred embodiment of the invention, given as an indicative and non-limitative example, in conjunction with the following drawings:

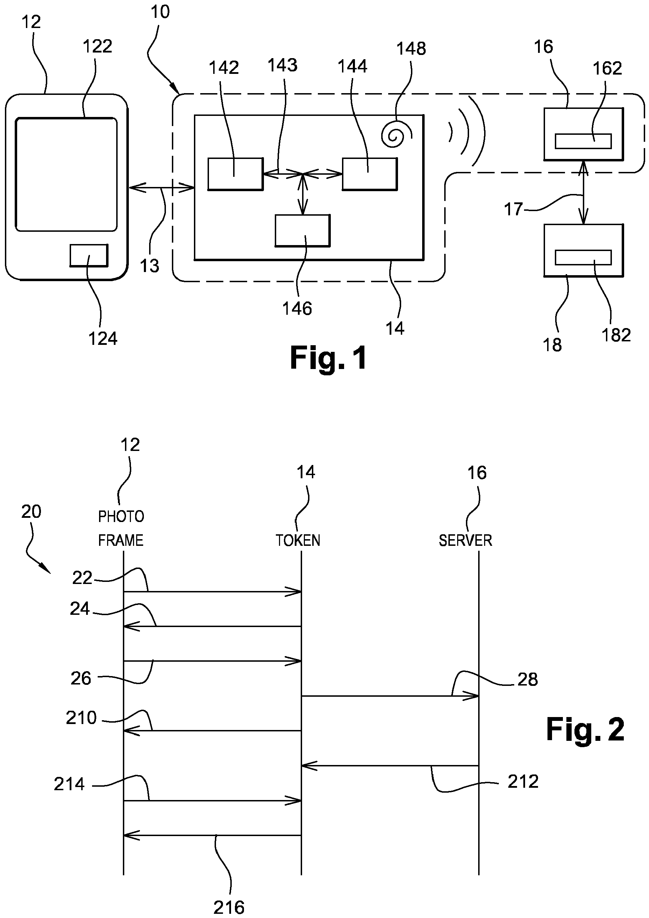

- Figure 1 illustrates a simplified diagram of one embodiment of a system for providing data to a DPF by using a wireless enabled USB type dongle coupled to the DPF and several remote servers that allow to present to the DPF at least two files in part originating from the dongle and to request one file(s) from the dongle to a central remote server, according to the invention; and
- Figure 2 represents an example of one message flow between notably the DPF, the dongle and the central remote server of figure 1, so as to load, through the dongle, from the central remote server, the DPF with a file(s).

### Detailed description:

Herein under is considered a case in which the invention method for providing data to a data disclosing device is implemented by, among others, a USB type dongle, as removable token.

Naturally, the herein below described embodiment is only for exemplifying purposes and is not considered to reduce the scope of the invention.

For example, instead of being a USB type dongle, the token may be a card, like a memory card, such as Secure Digital (or SD) or Multi-Media Card (or MMC) type card, or any other electronic medium that may have different form factors.

According to still other examples, the token may also be a chip soldered, possibly in a removable manner, to an hosting data disclosing device.

**Figure 1** shows schematically a system 10 for providing data to a DPF 12.

Such a system includes a USB type dongle 14, as removable token 14, and a central remote server 16, as first server 16.

It is to be noted that only one token 14 is represented for clarity reason. However, it is clear that the first server 16 is able to control a fleet of tokens that may relay the same or different data files.

The DPF 12, as data disclosing device, is used for publishing digital photos.

Instead of DPF 12, the data disclosing device may be a multimedia disclosing device, like a TV type set, that publishes audio and video data.

The DPF 12 includes a microprocessor (not represented), as means for processing data. The DPF microprocessor allows to read data to be disclosed from an external coupled device and to let disclose the read data to be disclosed after having decoded it.

The DPF 12 includes a display screen 122 for displaying digital photos, as a series of static images. The photos may be displayed as a slide show by which one digital photo is displayed, during a certain predefined time period, after having displayed another possible previous digital photo. The photos may be displayed in two or three dimensions. The photos may be observed by any person who is in front of the display screen 122.

Alternatively, instead of a display screen 122, the DPF 12 is equipped with a touch sensitive display screen.

The DPF 12 may be equipped with a loudspeaker (not represented) for diffusing audio data, such as music and/or song data.

The DPF 12 may include possibly a memory 124, as first memory.

The memory 124 may be used for storing one or several image files, as data to be disclosed.

The image file(s) is(are) in a form of data file(s). The form of the data file(s) may be data files in any format, such as, for instance, a Portable Network Graphics (or PNG), a BitMaP (or BMP), a Joint Photographic Experts Group (or JPEG), a Tagged Image File Format (or TIFF), Graphics Interchange Format (or GIF) type format(s). Each data file comprises one or several data blocks.

The memory 124 may be volatile or non-volatile.

The memory 124 may be a cache memory.

The memory 124 has a first size. The first size is equal to zero when the memory 124 is absent. When the memory 124 is present, the first size is preferably rather small. In other words, the DPF 12 has a capacity of its memory that is limited for storing data to be disclosed with respect to a capacity of a memory for storing data to be disclosed that is presented by the token 14, as coupled external device.

The DPF 12 includes a data input/output interface using, for example, a USB type protocol for exchanging data with the token 14.

The DPF 12 is thus able to read image files, as data to be disclosed, originating from the token 14, so as to disclose corresponding images through the display screen 122.

The token 14 plays, with respect to the DPF 12, a role of a provider of image files, as data to be disclosed, i.e. a role of a content provider.

The token 14 plays a role of a gateway while being transparent with respect to the DPF 12. The DPF 12 reads the image files originating from the token 14 without knowing that at least some image files originate from another external entity, like a first server 16.

The token 14 plays a role of a relay for transmitting image files, as data to be disclosed, originating preferably, through the first server 16, from one or several remote servers 16 and 18 to the DPF 12. The token 14, once coupled to the DPF 12, consists of an intermediary communication entity between the DPF 12 and the first server 16 while the DPF 12 does not know that the data to be disclosed is provided by the first server 16.

The token 14 is coupled to the DPF 12.

The token 14 is connected, through a contact link 13, to the DPF 12.

According to another embodiment (not represented), the token 14 is connected, through a contact-less link, i.e. a short range radiofrequency link, to the DPF 12. Such a short range radiofrequency link is used for exchanging between the DPF 12 and the token 14 data up to from around 20 cm (such as with a Near Field Communication (or NFC) type technology) until around 10 m (such as with a Bluetooth type technology).

The token 14 includes a chip (not represented). The chip includes at least one microprocessor 142, as data processing means, at least one memory 144 and at least two I/O interfaces 146 that are internally all connected, through an internal bidirectional data bus 143, to each other.

The I/O interfaces 146 allow communicating data from the internal chip components to the chip exterior and from the chip exterior to the internal chip components.

The I/O interfaces 146 are connected to, on one hand, for instance, a USB type connector (not represented), and, on the other hand, an antenna 148.

The microprocessor 142 processes, controls and communicates internally data, with all the other components incorporated within the chip and, through the I/O interfaces 146, with the chip exterior.

The microprocessor 142 is able to read data to be disclosed from, write data to be disclosed into, and/or execute data stored within the memory 144, termed second memory 144.

The microprocessor 142 executes an Operating System (or OS) and at least two applications. The OS and the applications are stored within the second memory 144.

As applications, there are at least one application for connecting the token 14 to an external entity(ies) and at least one application for supplying image files to the DPF 12, as a locally coupled host device. The external entity(ies) may be local or distant. There is also an application for loading one or several image files from an external entity(ies), like a first remote server 16.

The token 14 publishes or exposes to the coupled DPF 12, as data disclosing device, a Mass Storage Class (or MSC). The token 14 is thus seen as a hard disk by the DPF 12, i.e. as a data repository.

The second memory 144 constitutes a local data storage space with respect to the DPF 12.

The second memory 144 includes preferably a cache memory, termed second cache memory for storing data to be disclosed.

The second memory 144 stores image files, as data to be disclosed. The data to be disclosed is known in advance to neither the token 14 nor the DPF 12. The data to be disclosed is (down)loaded, at least in part, from an external remote server(s) 16 and/or 18 and read, at least in part, by the locally coupled host device, namely the DPF 12.

The token OS manages access to data stored within the token 14. The organization with which two or more data files are stored within the token memory 144 is presented through a File System (or FS). The FS lists a certain number or count of image files, as data files.

The token 14 presents file metadata, as information, including a size, termed second size, of image files stored within the token memory 144. The second size is comprised within a description of a set of two or more image files, as data files.

The presented second size is predefined. The presented second size may be fixed during a manufacturing of the token 14. For instance, the second size is equal to 2 Go.

According to an important feature of the invention, the second size is greater than the first size. Thanks to the invention, the coupled DPF 12 is forced to read from the token 14 at least one image file, as first data file, and then at least one data block of another image file, as second data file. Due to a capacity of recording data that is less than the size of the data files presented by the token 14, the DPF memory 124, or first memory, is not able to import and therefore store all the data files at once. The token 14 is thus able to supply the coupled DPF 12 with data blocks relating to at least two image files, as data files.

The second memory 144 is accessible, through a so-termed virtual File Allocation Table (or FAT) of the FS. The virtual FAT provides a correspondence between virtual addresses and physical addresses of the second memory 144 to be associated. The virtual FAT is accessed, through the OS of the token 14, by the OS of the DPF 12. The virtual FAT is an intermediary layer between the token 14 OS and the second memory 144, as physical component(s).

The token 14 is preferably arranged to generate and store into the second memory 144 at least one data block relating to one or several image files, as data files. The thus generated data block(s) may be an audio data block(s), an image data block(s), and/or a video data block(s) relating to one or several files. The generated data block(s) may be used for presenting, through the DPF 12, one audio and/or video (being either static (image) or dynamic) message(s) for informing a person or people who are close to the DPF 12. For instance, the information message is a message for indicating that a connection with an external entity, like a first server 16, is terminated or broken. For each generated data block of an image file, as data file, the virtual FAT is updated so that the DPF 12 is able to read the generated data block from the token memory 144. In other words, the virtual FAT associates each generated data block with a physical memory address. The token 14 is able to continue to provide the DPF 12 with an image file(s) that the token 14 has possibly generated while an image file is not completely (down)loaded from an external entity(ies).

Each data file includes at least one data block.

The data block has a fifth size. For instance, the fifth size is 512 bytes.

Each data file listed within the FS has a maximum third size. The maximum third size is preferably predefined in a sufficiently large manner so that the second memory 144 is able to store completely a data file that is (down)loaded from a (remote) Web entity(ies), like a first server. Otherwise, i.e. when the maximum third size is not large enough, the DPF 12, as data disclosing device, omits a disclosing of the data file that is greater than the maximum third size. For instance, the maximum third size is equal to 500 ko.

The second memory 144 for storing image files, as data files, has a fourth size. The fourth size is at least twice greater than the maximum third size, in order to avoid notably a time-out relating to a USB type protocol, as protocol of data exchange between the token 14 and the DPF 12. The second memory 144 for storing image files is thus able to store at least two image files.

The second memory 144 stores data relating to a Uniform Resource Identifier (or URI), a Uniform Resource Locator (or URL) and/or an Internet Protocol (or IP) address of a first (remote) server 16 to be addressed. The first server 16 may be included within an OTA (acronym for "Over The Air") and/or an OTI (for "Over The Internet") platform(s).

The second memory 144 stores preferably credentials of a token user. The credentials may include a subscriber identifier(s), like an International Mobile Subscriber Identifier (or IMSI), and one or several keys, like ki, allowing to identify and authenticate a subscriber to one or several radio communication network(s). The credentials are used for authenticating the token user to a concerned external entity(ies) which allow(s) updating a content of the second memory 144. The credentials may comprise an identifier and/or a password. The token 14 may be arranged to submit automatically the credentials to the concerned external entity(ies), like the first server 16, so as to access, directly or indirectly, image file(s).

The second memory 144 may store personal biometric data, as reference biometric data, like one fingerprint(s), one iris print(s), one voiceprint(s) relating to one authorized user.

The second memory 144 may store at least one key to be used for encrypting and/or decrypting data, in order to protect data to be exchanged, through an RF link(s) 15, with an external entity(ies), like a first server 16, in a confidential manner.

The key(s) may be a symmetric key(s) that is(are) shared (i.e. also stored by the other device) with the external entity that is the token 14 interlocutor.

The second memory 144 may securely store data relating to the token 14 itself, like a private key and a corresponding public key. To access the second memory 144, a token user may have to be recognized as an authorized user. Otherwise, i.e. if the user is not an authorized user, the token 14 forbids to access the second memory 144 and therefore the data stored therein.

The token 14 is arranged to (down)load, through an RF link(s) 15, from the first server 16 one or several image files and to update the token 14 by storing the loaded image files into the second memory 144.

The second memory 144 may be quite small in terms of memory space while having a capacity to record some image file(s) that is(are) dynamically loaded and to be read by the DPF 12. Initially, the token memory 144 may store only two image files and load, during a certain time period, as many image files as the ones that are available at the first server 16 side. Thus, seen from the DPF 12, the token 14 may have a huge capacity for recording image files while most of them are loaded dynamically and firstly stored at the first server 16 side. The token 14 lets the DPF 12 believe that the dynamically loaded image files originate from the token 14 itself while they originate from another entity(ies). The other entity(ies) may be local and/or distant. The other entity(ies) may be dynamically updated by image file(s) that may be remotely recorded and uploaded from a camera(s) and/or another device(s) (not represented) that is(are) able to capture image file(s), as data to be disclosed.

The token 14 is associated with the first server 16.

The first server 16 manages access to image files, as data files. The first server 16 supports, for instance, a web 2.0 type service(s).

The token 14 is able to interrogate, over an RF link 15, through a network access point (not represented), the first server 16 while requesting it one or several data files.

Alternately, the token 14 is able to interrogate, over the RF link 15, through a network access point (not represented), the first server 16 while requesting it one or several addresses of one or several third memory(ies) which store(s) one or more data files.

The token 14 acts as a modulator-demodulator (or modem), i.e. that carries out the following operations:
- a modulation of an analogical carrier signal to encode digital information to be transmitted, over the antenna 148, to the first server 16 (or another entity), and
- a demodulation of a received analogical carrier signal to decode the encoded digital information that is received, over the antenna 148, from the first server 16 (or another entity).

The RF link 15 may be a contact-less or wireless link.

The RF link 15 may be more or less short. A short range radio-frequency(ies) may be fixed, for instance, at 2,4-2,5 GHz with a range of about 10 m to 100 m (for Zigbee (e.g. IEEE 802.15.4), Wifi and Bluetooth or Bluetooth low energy (e.g. IEEE 802.15.1)), from around 2,4 GHz to around 10 GHz (for Ultra Wide Band or UWB e.g. IEEE 802.15.4a) and/or other frequency value(s) allowing to communicate data at short range (typically from about 20 cm to 800 m).

The RF link 15 may be more or less long. A long range radio-frequency(ies) may be fixed at several hundreds of MHz, for instance, around 850, 900, 1800 and/or 1900 MHz, as long range radio-frequency(ies).

The RF link 15 is bi-directional, i.e. that enables to exchange data in two ways between the token 14 and an external entity 16 or 18.

For each received data block of an image file, as data file, the token 14 writes the received data block into the token memory 144. At each writing operation into the token memory 144, the virtual FAT is dynamically updated so that the DPF 12 is able to read the received data block from the token memory 144.

The token 14 is arranged so that two operations, namely a reading and a writing operation, are carried out in parallel in terms of exchange of data with the exterior of the token 14. More exactly, the DPF 12 reads the token memory 144 and the token 14, after each possible generation or each reception of one or several data blocks of an image file(s), writes into the token memory 144 the possibly generated or received data block(s).

The token 14 gives preferably a priority to an execution of the reading operation instead of the writing operation when corresponding commands originate at one and a same time. In a preferred embodiment, the token 14 manages such a priority while giving an order in the execution of corresponding threads by beginning with an execution of a thread relating to a reading operation before an execution of a thread relating to a writing operation.

The token 14 is able to collect, in a contact-less or wireless manner, one or several image files, as data files, from at least one server, like the first server 16 and/or a second server 18, as content provider(s).

The token 14 may be able to check whether a size of each data file is less than or equal to the maximum third size. If the file size is less than the maximum third size, then the token 14 sends to the DPF 12 the concerned data file. Otherwise, if the file size is greater than the maximum third size, then the token 14 reduces the file size so that the file size is less than or equal to the maximum third size. Thus, the token 14 reduces the file size to get a corresponding smaller image file that is to be sent to the DPF 12 before displaying a corresponding image.

The token 14 may be able to provide the DPF 12 data files that are registered within the second memory 144 while sending to the DPF 12 in parallel different data blocks of different image files at the same time. Such a data file providing mechanism may permit to display the corresponding images, according to a thumbnail mode. The thumbnail mode consists in showing on the DPF display screen 122 thumbnails, as images that are reduced in size with respect to their original forms, i.e. non-reduced images.

The first server 16 is a computer and includes a microprocessor, as data processing means.

The first server 16 includes or accesses a memory 162, termed third memory 162. The third memory 162 may store one or several image files, as data file(s).

The third memory 162 may register at least one key to be used for encrypting and/or decrypting data, in order to protect data to be exchanged with a token 14 (or each token of a managed fleet). The key may be a public key related to a token 14.

At least certain data file(s) may originate from (an)other server(s), like the second server 18. The first server 16 may be able to fetch a data file(s) from at least another server(s) before registering it(them) into the third memory 162. Before storing data files within the third memory 162, the first server 16 may convert a format of the fetched data into a desired predefined format, like JPEG.

The third memory 162 may register one or several addresses of another server(s), as other third memory(ies) registering one or several image files, as data file(s).

The second server 18 is connected, through a wire link 17, possibly through a network (not represented), to the first server 16.

The token 14 allows providing data to be disclosed to the DPF 12 that is not able to access, over an RF link, one or several external servers.

There are at least two embodiments for getting image files.

According to a preferred embodiment, the first server 16, as content provider, stores within the third memory 162 image files and is the sole interlocutor of the token 14. The token 14 downloads, over the RF link 15, from the first server 16 one or several image files on demand or request originating from the token 14.

Alternatively, the token 14 is able to interrogate, over the RF link 15, the first server 16 while requesting it an address of a memory(ies), termed third memory(ies), as content provider. The third memory(ies) store(s) one or several image files. According to such another embodiment, the first server 16, as memory address provider, is a first interlocutor of the token 14 and further other resource(s), such as another server(s), as content provider(s), is(are) the further interlocutor(s) of the token 14. Once the first server 16 has sent to the token 14 an address of each third memory storing image files, the token 14 receives, after having sent a corresponding request, from the third memory one or several data blocks of one or several image files.

The first server 16 may be able to generate image files before providing the token 14 with the generated image files. The generated image files may include information relating to the weather or shares or security information, like captcha, as challenge-response so as to ensure that the response is generated by a person (and not a computer).

The first server 16 may be able to check whether a size of each data file is less than or equal to the maximum third size. If the file size is less than the maximum third size, then the first server 16 sends to the token 14 the concerned data file.

Otherwise, if the file size is greater than the maximum third size, then the first server 16 may reduce the file size so that the file size is less than or equal to the maximum third size. With such a size reduction task or operation, the first server 16 allows saving bandwidth of the RF link 15 between the first server 16 and the token 14 and the size of the second memory 144, as fourth size. If the file size is greater than the maximum third size, then the first server 16 may forbid to send to the token 14 the concerned data file, i.e. block the concerned data file at the first server 16 side.

The first server 16 may be able to delegate to another server such a size reduction task or operation.

To reduce the file size below the maximum third size, the first server 16 (or another server, as delegated server) may increase a rate for compressing the concerned data for instance by removing redundancy data. In an alternate or complementary manner, the first server 16 (or another server, as delegated server) may decrease a quality of the concerned data.

The first server 16 may be able to manage a white server list, as server(s) which is(are) authorized to be an interlocutor(s) for fetching data file(s) from it(them), and/or a black server list, as server(s) which is(are) forbidden to be an interlocutor(s) for fetching data file(s) from it(them).

**Figure 2** depicts an exemplary embodiment of the invention method 20 for providing data to the DPF 12 that involves the token 14 and the first server 16, as unique content provider of the token 14.

It is assumed that the token 14 is coupled, for a first time, to the DPF 12.

As soon as a person, who carries the token 14, connects it to the DPF 12, the DPF 12 sends automatically to the token 14 a command 22 for reading a content of the token 14.

The DPF 12 and the token 14 exchange by using a USB type protocol. The DPF 12 and the token 14 may use any other data exchange protocol allowing to transfer data files from the token 14 to the DPF 12.

The token 14 sends back to the DPF 12, as response to the received command, a description 24 of the token content. The token 14 presents, through a virtual FAT, its content with a second size relating to a set of files that are presented as being stored within the second memory 144 of the token 14. The presented second size is bigger than a first size of a possible first memory 124 of the DPF 12.

The DPF 12 sends to the token 14 at least one command 26 for reading at least one data block of two or more data files.

For simplicity reason, only one command 26 for reading the two data files is represented. However, the DPF 12 may send to the token 14 several commands, for instance, one command for each data block to be read.

As soon as the token 14 is powered up, the token 14 initiates an RD communication session by sending, over an RF link 15, to a first server 16 a request 28 for sending one or more data files.

For simplicity reason, only one request 28 for reading data file(s) is represented. However, the token 14 may send to the first server 16 several requests, for instance, one request for fetching one data block to be imported into the second memory 144.

Alternatively, the order of the two previous messages 26 and 28 that are exchanged between the token 14 and its two interlocutors, namely the DPF 12 and the first server 16, may be reversed.

The token 14 sends to the DPF 12, as response to the command 26 for reading one data block, at least one response 210 including a first data file and at least one data block of a second data file 210.

For simplicity reason, only one response 210 for transmitting a first data file and one or data blocks of a second data file is represented. However, the token 14 may send to DPF 12 several responses, for instance, one response for each read data block.

Before responding to the DPF 12, the token 14 addresses internally the second memory 144, so as to retrieve requested data.

Each time the token 14 sends to the DPF 12 one data block of a data file, the token 14 points at a physical address of the second memory 144 from which a valid data block is stored. The valid data block is set with a predefined data block which may have been generated by the token 14 or the first server 16.

As soon as the DPF 12 is supplied by the token 14 with a first data file, the DPF 12 discloses the first data file, for instance, by displaying, through its display screen 122, a corresponding image.

While the token 14 has not received from the first server 16 any data file, the token 14 continues to provide the DPF 12 with one or more data files that may be generated by the token 14.

As soon as the DPF 12 is supplied by the token 14 with a second data file, the DPF 12 discloses the second data file.

The first server 16 sends, over the RF link 15, to the token 14, as response to the received request 28, a third data file 212.

The token 14 and the first server 16, as data repository, exchange by using a HyperText Transfer Protocol (or HTTP) type protocol. The token 14 and the first server 16 may use any other data exchange protocol allowing to transfer data files from the first server 16 to the token 14.

Once the token 14 has received the third data file, the token 14 updates the second memory 144 by storing into the second memory 144 the third data file 212.

The DPF 12 sends to the token 14 at least one command 214 for reading at least one data block of one or more data files.

Alternately, the order of the two last messages 212 and 214 that are exchanged between the token 14 and its two interlocutors, namely the DPF 12 and the first server 16, may be reversed.

The token 14 sends to the DPF 12, as response to the command 214 for reading one data block, at least one response 216 including the third data file, as the lastly updated data file.

As soon as the DPF 12 is supplied by the token 14 with a third data file, the DPF 12 discloses the third data file.

The embodiment that has just been described is not intended to limit the scope of the concerned invention. Other embodiments may be given. As another embodiment example, instead of exchanging with the first server 16, as remote entity, the token 14 exchanges, over a contactless RF link, such as an NFC type link, with a local entity.

## Claims

1. A method (20) for providing data to a data disclosing device (12), **characterized in that**, the data disclosing device including means (122) for disclosing data and possibly at least one first memory (124) for storing data to be disclosed, the first memory having a first size, a token (14) being coupled to the data disclosing device, the token comprising at least one second memory (144) for storing data to be disclosed, the method comprises the following steps:
- the token presents a description (24) of a set of at least two data files, the file set description comprising a second size, the second size being greater than the first size, each of the at least two data files comprising at least one data block;
- the token sends to the data disclosing device data relating to a first file and at least one data block relating to at least one second data file (210); and
- the token sends, over a radiofrequency link, to a first remote server (16) a request (28) for sending at least one data file and/or at least one address of at least one third memory storing at least one data file.

2. Method according to claim 1, wherein the first remote server and/or at least one third memory sends to the token data relating to at least one file (212).

3. Method according to claim 2, wherein the token generates, as one data block relating to at least one second data file, at least one element of a group comprising:
- at least one image data block relating to at least one file;
- at least one audio data block relating to at least one file;
- at least one video data block relating to at least one file.

4. Method according to any of claims 1 to 3, wherein, the first remote server being connected to the at least one second remote server (18), the first remote server fetches from the at least one second remote server data relating to at least one file and sends to the token the fetched data relating to at least one file.

5. Method according to any of claims 1 to 4, wherein, prior to a sending of data relating to at least one file from the first remote server to the token, each of the at least two data files having a maximum third size, the method further includes a step in which the first remote server checks whether a size of each data file is smaller than or equal to the maximum third size and sends to the token data relating to at least one file and/or at least one address of at least one third memory only if the file size is smaller than or equal to the maximum third size.

6. Method according to claim 5, wherein, only if the file size is greater than the maximum third size, the first remote server reduces the file size so that the file size is smaller than or equal to the maximum third size.

7. Method according to any of claims 1 to 6, wherein, each of the at least two data files having a maximum third size, the second memory comprising a second cache memory, the second cache memory having a fourth size, the fourth size being at least twice greater than the maximum third size, the second cache memory stores data relating to at least two files.

8. Method according to any of claims 2 to 7, wherein the data disclosing device discloses the first data file and, as soon as the data disclosing device receives all data relating to at least one second file, the data disclosing device discloses at least the second data file.

9. A token (14) for providing data to a data disclosing device (12), **characterized in that**, the token being likely to be coupled to a data disclosing device and to be connected to at least one remote server (16), the data disclosing device including means (122) for disclosing data and possibly at least one first memory (124) for storing data to be disclosed, the first memory having a first size, the token comprising at least one second memory (144) for storing data to be disclosed, the token is adapted to:
- present a description (24) of a set of at least two data files, the file set description comprising a second size, the second size being greater than the first size, each of the at least two data files comprising at least one data block;
- send to the data disclosing device data relating to a first file and at least one data block relating to at least one second data file (210); and
- send, over a radiofrequency link, to a first remote server (16) a request (28) for sending at least one data file and/or at least one address of at least one third memory storing at least one data file.

10. A system (10) for providing data to a data disclosing device (12), **characterized in that**, the system comprising a token (14) and a first remote server (16), the token being coupled to a data disclosing device, the data disclosing device including means (122) for disclosing data and possibly at least one first cache memory (124) for storing data to be disclosed, the first cache memory having a first size, the token comprising at least one second memory (144) for storing data to be disclosed,
**in that** the token is adapted to:
- present (24) a description of a set of at least two data files, the file set description comprising a second size, the second size being greater than the first size, each of the at least two data files comprising at least one data block;
- send to the data disclosing device data relating to a first file and at least one data block relating to at least one second data file (210); and
- send, over a radiofrequency link, to a first remote server a request (28) for sending at least one data file and/or at least one address of at least one third memory storing at least one data file.
